# EUROPEAN PATENT SPECIFICATION

(11) **EP 4 292 155 B1**
(45) Date of publication and mention of the grant of the patent: **30.04.2025**
(21) Application number: 21708572.9
(22) Date of filing: 11.02.2021
(51) Int. Cl.: H01M 8/04119, H01M 8/04082, H01M 8/18, H01M 8/04186, H01M 8/0662

(54) **REDOX FLOW BATTERY**
REDOX-DURCHFLUSSBATTERIE
BATTERIE À FLUX REDOX

(43) Date of publication of application: 20.12.2023
(73) Proprietor: Green Energy Storage S.r.l., 38123 Trento (TN) (IT)
(72) Inventor: PUCHER, Ilaria, 38123 Trento (TN) (IT)
(74) Representative: Palladino, Saverio Massimo
(86) International application number: PCT/EP2021/053346
(87) International publication number: WO 2022/171284

(56) References cited:
- WO-A1-2020/109807
- JP-A- S61 211 960
- JP-B2- 5 792 560
- JP-B2- 6 524 167
- US-A- 3 152 013
- US-A- 4 818 637
- US-A- 5 520 793
- US-A1- 2014 072 836
- US-A1- 2016 141 694
- US-A1- 2016 222 524
- US-A1- 2019 341 643
- US-A1- 2020 014 048
- US-A1- 2022 029 188
- ANDRÉ SCHLATTER: "Pile à combustible hydrogène-iode", 1 January 1973, THÈSE DE DOCTORAT, ÉCOLE POLYTECHNIQUE FÉDÉRALE DE LAUSANNE, CH, PAGE(S) 1 - 170, XP009541548
- DOWD REGIS P. ET AL: "A Study of Alkaline-Based H 2 -Br 2 and H 2 -I 2 Reversible Fuel Cells", JOURNAL OF THE ELECTROCHEMICAL SOCIETY, 1 January 2016 (2016-01-01), pages F1471 - F1479, XP093007800, Retrieved from the Internet <URL:https://hub.hku.hk/bitstream/10722/242101/1/content.pdf?accept=1> [retrieved on 20221213], DOI: 10.1149/2.0011614jes
- SCHLATTER A ET AL: "Evaluation of the performances of an hydrogen@?iodine fuel-cell", ENERGY CONVERSION,, vol. 14, no. 2, 1 February 1975 (1975-02-01), pages 43 - 46, XP023646557, ISSN: 0013-7480, [retrieved on 19750201], DOI: 10.1016/0013-7480(75)90080-7
- TOLMACHEV YU. V.: "Hydrogen-halogen electrochemical cells: A review of applications and technologies", RUSSIAN JOURNAL OF ELECTROCHEMISTRY, vol. 50, no. 4, 1 April 2014 (2014-04-01), RU, pages 301 - 316, XP055855894, ISSN: 1023-1935, Retrieved from the Internet <URL:https://link.springer.com/content/pdf/10.1134/S1023193513120069.pdf> DOI: 10.1134/S1023193513120069

## Description

### FIELD OF THE INVENTION

The invention relates to a redox flow battery, to an energy storage system including said redox flow battery, as well as to methods for delivering and/or storing electricity by means of said redox flow battery.

### BACKGROUND

With the Strategic Energy Technology Plan that Europe has set to boost energy transition and get to a climate neutral energy system, the development of low-carbon technologies and their fast implementation is a must.

Renewable energy sources are surely essential to achieve the decarbonization targets, but it is well known that they bring along two main issues: 1) their intermittency, which causes problems like fluctuations, interruptions and blackouts to both the grid and the energy demand; 2) the substantial temporal mismatch between the high peaks of renewable power sources (like solar around midday) and the customers need (e.g. households mainly need electricity in the morning and in the evening).

Energy storage systems aim to smooth out peaks and valleys from renewable energy and to overcome the time discrepancy between energy production by renewable energy sources and energy consumption by end users. Energy storage solves the renewable energy curtailment issue. It also provides flexibility to the grid and therefore uninterrupted power to users.

Redox flow batteries (RFBs) are considered the best candidate for such application thanks to their independent scalability of energy and power and to their potential low cost and long life.

Redox flow batteries are secondary batteries whose active materials are usually dissolved in liquid electrolytes that are pumped through a cell or stack (assembly of many electrochemical cells), where redox reactions occur, i.e. where energy is interconverted between electrical and chemical energy. Battery energy is given by the amount of liquid electrolyte stored in the tanks. Battery power is given by the active area of the membrane electrode assembly in the cell or stack.

Many different RFB technologies are available today. They could be divided based on the type of active species/electrolyte: liquid-liquid electrolytes, gas-liquid electrolytes, solid-liquid electrolyte. The first two still maintain the advantage of independent scalability of energy and power, while the latter does not, because energy depends on the solid electrode.

The first type can then be further divided into aqueous and non-aqueous electrolytes. While the former has a substantial advantage of lower cost, the latter can claim a broader electrochemical window and therefore a potentially higher battery energy density.

Although the energy storage systems that use RFBs are the subject of considerable and ever-increasing interest given their potential, to date the Applicant has found that significant technological and functional limits remain in this sector.

In particular, the Applicant has found that RFBs with liquid electrolytes usually use strong acid or alkaline environments that may lead to corrosion problems thus requiring expensive materials, at least for the elements in contact with the electrolytes.

At the same time, the Applicant has also found that hybrid or semi-solid flow batteries (including zinc-based and Li-based RFBs) are limited by the solid electrolyte and are therefore not completely modular. This is a substantial drawback for this type of storage systems that boast modularity as a major advantage.

The Applicant has also found that solid-based flow batteries may face cell degradation issues due to the formation of by-products during operation; for example, zinc-based flow batteries show zinc dendrites formation upon cycling, which degrade cell performance.

Additionally, the Applicant has also found that safety and disposal issues may arise with some RFBs; for example, despite being one of the oldest and most studied RFB molecule in literature, the use of vanadium based RFBs requires adoption of particular and expensive safety and disposal measures due to the toxicological profile of vanadium. In addition, vanadium has limited solubility, thus allowing for a limited energy density, and vanadium RFBs (VRFBs) work in acid environment, thus requiring also the use of expensive corrosion-resistant materials.

Furthermore, the Applicant has also noted that all-organic and all-copper flow batteries showed low energy density, thus requiring a much larger electrolyte volume to achieve a certain battery energy compared to other RFB technologies.

A first object of the present invention is therefore to provide a redox flow battery capable of reducing and/or solving the aforementioned drawbacks.

The background art for the present invention is represented e.g. by non-patent literature Dowd Regis P. et al.: "A Study of Alkaline-Based H2-Br2 and H2-I2 Reversible Fuel Cells", Journal of the Electrochemical Society, 1 January 2016, pages F1471-F1479.

Further background art for the present invention is represented e.g. by non-patent literature Schlatter A. et al.: "Evaluation of the performances of an hydrogen-iodine fuel-cell", Energy Conversion, vol. 14, no. 2, 1 February 1975, pages 43-46; non-patent literature Tolmachev Y. V. : "Hydrogen-halogen electrochemical cells: A review of applications and technologies", Russian Journal of Electrochemistry, vol. 50, no. 4, 1 April 2014, pages 301-316; or by patent literature US2020/014048 A1, JPS61211960 A, US4818637 A, US3152013 A, WO2020109807 A1 or US5520793 A.

### SUMMARY OF INVENTION

The present invention is defined by the present independent claim 1, directed to a redox flow battery, as well as by the present independent claims 8 and 9. directed respectively to a method of storing energy with the battery and a method of delivering energy with the battery.

In accordance with the present invention, the Applicant has surprisingly found out that these desired characteristics can be achieved by providing an aqueous hydrogen-iodine (H₂-I₂) redox flow battery in which the aqueous electrolyte comprises at least one iodine-containing species and at least one pH buffering agent.

Therefore, in a first aspect the present invention relates to a redox flow battery comprising:
- a hydrogen gas tank;
- an electrolyte tank containing an aqueous electrolyte;
- at least one cell having a first half-cell having a first electrode, a second half-cell having a second electrode, and a separator membrane arranged between the first and second half-cell;
wherein the aqueous electrolyte comprises at least one iodine-containing species and at least one pH buffering agent.

The operating principle of the redox flow battery according to the present invention is based on the redox reactions of hydrogen (H₂) and iodine (I₂), which may generally be described with respect to charging/discharging reactions depending on the pH of the reaction environment by the following general equations (1) in acid conditions and (2) in basic conditions:

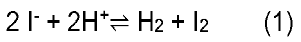

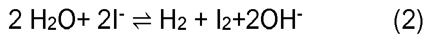

The Applicant has surprisingly found out that by using an aqueous electrolyte containing at least one pH buffering agent it is possible to maintain an almost constant open circuit voltage, maintaining the active species redox potential constant too while at the same time avoiding or at least remarkably reducing also corrosion phenomena of the components of the battery such as piping, tanks and cell. In this way, the redox flow battery according to the present invention provides a stably constant voltage cell and a prolonged battery longevity by avoiding or remarkably reducing degradation phenomena of the battery.

The Applicant has also found out that the redox flow battery according to the present invention provides further advantages with respect to the state-of-the-art redox flow batteries.

In particular, the redox flow battery according to the present invention is of the liquid-gas type and no solid forms are used as active species, so that power and energy are independently scalable. This allows a complete customization of the battery based on customers energy and power needs.

Furthermore, iodine-containing species show high solubility in the aqueous environment of the electrolyte, and this allow for a high energy density of over 100 Wh/l, not previously achieved in all-liquid or gas-liquid RFBs. The Applicant noted that zinc-iodine batteries only show comparable values of energy density, but also that they are limited in terms of independent power and energy scalability and in addition because of dendrites formation which negatively affect the life of the battety itself due to cell degradation upon cycling. The Applicant therefore found out that the battery according to the invention, associating a high energy density with independent power and energy scalability and with no degradation phenomena upon cycling, provides an improved redox flow battery compared to e.g. hybrid zinc-iodine batteries.

Finally, the Applicant also found out that the redox flow battery according to the invention, being based on iodine-containing species in an aqueous electrolyte and hydrogen gas is also advantageous in terms of production and operation costs, safety requirements, end of life disposal and recycling costs.

Hence, the present invention provides a redox flow battery with stably constant open circuit cell voltage and high energy density as well as with prolonged battery longevity, independently scalable in terms of power and energy, with no degradation phenomena upon cycling and not critical in terms of safety requirements, as well as competitive in terms of production, operation, and recycling costs.

In a further aspect, the present invention relates also to an energy storage or delivery system comprising at least one redox-flow battery according to the first aspect of the present invention and at least one connection means apt to connect said at least one redox-flow battery to an external power source or to a load.

The advantages of the energy storage or delivery system according to this further aspect have been already outlined with reference to the above redox flow battery according to the first aspect of the invention and are not repeated herewith.

### BRIEF DESCRIPTION OF THE DRAWINGS

Figure 1 shows a schematic representation of an embodiment of the redox flow battery according to the invention in which the pH buffering agent of the aqueous electrolyte solution shows an acid working pH;
Figure 2 shows a schematic representation of the charging operation of the redox flow battery according to figure 1;
Figure 3 shows a schematic representation of the discharging operation of the redox flow battery according to figure 1;
Figure 4 shows a schematic representation of a further embodiment of the redox flow battery according to the invention in which the pH buffering agent of the aqueous electrolyte solution shows a basic working pH;
Figure 5 shows a schematic representation of the charging operation of the redox flow battery according to figure 4;
Figure 6 shows a schematic representation of the discharging operation of the redox flow battery according to figure 4;
Figure 7 shows the cyclic voltammetries recorded when studying hydrogen/proton redox reactions in Example 1; and
Figure 8 shows the cyclic voltammetries recorded when studying iodine/iodide redox reactions in Example 1.

### DETAILED DESCRIPTION OF THE INVENTION

In a first aspect, the present invention relates to a redox flow battery comprising:
- a hydrogen gas tank;
- an electrolyte tank containing an aqueous electrolyte;
- at least one cell having a first half-cell having a first electrode, a second half-cell having a second electrode, and a separator membrane arranged between the first and second half-cell;
wherein the aqueous electrolyte comprises at least one iodine-containing species and at least one pH buffering agent.

The operation principle of the redox flow battery according to the present invention is based on the redox reactions of hydrogen (H₂) and iodine (I₂), which may generally be described with respect to charging/discharging reactions depending on the pH of the reaction environment by the following general equations (1) in acid conditions and (2) in basic conditions:

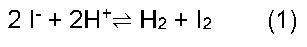

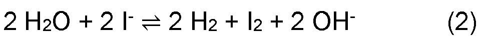

The Applicant has surprisingly found out that by using an aqueous electrolyte containing at least one pH buffering agent it is possible to maintain an almost constant open circuit voltage, maintaining the active species redox potential constant too, while at the same time avoiding or at least remarkably reducing also corrosion phenomena of the components of the battery such as piping, tanks and cell. In this way, the redox flow battery according to the present invention provides a stably constant open circuit cell voltage and a prolonged battery longevity by avoiding or remarkably reducing degradation phenomena of the battery.

In addition, the Applicant has found out that the redox flow battery according to the present invention provides further advantages with respect to the state-of-the-art redox flow batteries.

In particular, the redox flow battery according to the present invention is of the liquid-gas type and no solid forms are used as active species, so that power and energy are independently scalable. This allows a complete customization of the battery based on customers energy and power needs.

Furthermore, iodine-containing species show high solubility in the aqueous environment of the electrolyte, and this allow for a high energy density of over 100 Wh/l, not previously achieved in all-liquid or gas-liquid RFBs. The Applicant noted that zinc-iodine batteries only show comparable values of energy density, but also that they are limited in terms of independent power and energy scalability and in addition because of dendrites formation which negatively affect the life of the battety itself due to cell degradation upon cycling. The Applicant therefore found out that the battery according to the invention, associating a high energy density with independent power and energy scalability and with no degradation phenomena upon cycling, provides an improved redox flow battery compared to e.g. zinc-iodine batteries.

Finally, the Applicant also found out that the redox flow battery according to the invention, being based on iodine-containing species in an aqueous electrolyte and hydrogen gas is also advantageous in terms of production and operation costs, safety requirements, end of life disposal and recycling costs.

Hence, the present invention provides a redox flow battery with stably constant open circuit cell voltage and high energy density as well as with prolonged battery longevity, independently scalable in terms of power and energy, with no degradation phenomena upon cycling and not critical in terms of safety requirements, as well as competitive in terms of production, operation, and recycling costs.

Within the framework of the present description and in the subsequent claims, except where otherwise indicated, all the numerical entities expressing amounts, parameters, percentages, and so forth, are to be understood as being preceded in all instances by the term "about". Also, all ranges of numerical entities include all the possible combinations of the maximum and minimum values and include all the possible intermediate ranges, in addition to those specifically indicated herein below.

In the context of the present application, the expression "working pH" referred to a pH buffering agent indicates the useful pH value or range at which the buffering agent keeps pH at a nearly constant value upon addition of an acid or a base. Said values are generally listed in literature or in the technical data sheets of buffering solutions. In case of pH buffering agents made of a mixture of a weak acid and its conjugate base, as rule-of-thumb the working pH of a buffer is considered to be within about 1 pH unit of the pKa of the weak acid, since in this range its buffering capacity is maximized.

The present invention may present in one or more of the above aspects one or more of the characteristics disclosed hereinafter.

The redox flow battery according to the present invention comprises an electrolyte tank containing an aqueous electrolyte. Said aqueous electrolyte comprises at least one iodine-containing species and at least one pH buffering agent.

In the redox flow battery according to the invention, the pair iodine/iodide is one of the active species, as apparent also by equations (1) and (2) above. In the context of the present invention, therefore, with the expression "iodine-containing species" are meant iodine and iodide ions due to their participation to the redox reactions occurring during charging/discharging operations of the battery according to the invention. At the same time, since as it is well known in aqueous environments iodine and iodide ions may also lead to formation of the triiodide anion (I₃⁻) according to the equilibrium of equation (3): 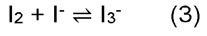 in the context of the present invention the expression "iodine- containing species" is meant therefore to include also triiodide anions. Triiodide anions, by way of equation (3), can indeed release iodine and iodide in the aqueous electrolyte solution and are therefore to be considered active species as well.

Furthermore, in the battery according to the invention different iodide-containing species can be used too. For example, hypoiodous acid, or iodate species which are suitable to release iodine and iodide as well in the aqueous electrolyte solution. Preferably, said at least one iodine-containing species is selected from the group consisting of: iodine, a triiodide, an iodide, hypoiodous acid, and an iodate. More preferably, According to the present invention, said at least one iodine-containing species is selected from the group consisting of: iodine, a triiodide, an iodide.

Preferably, said at least one iodine-containing species is selected from the group consisting of: Nal, Kl, ZnI₂, SrI₂, CaI₂, MgI₂, FeI₂, MnI₂, CoI₂, NiI₂, Asl, CdI₂, InI₃, SbI₃, BaI₂, HI, Lil, Bl₃.

Preferably, in the aqueous electrolyte without additives the concentration of said iodine-containing species ranges in the interval from 0.01 to 15 M, expressed as iodide. The Applicant in this regard surprisingly found out that, since the solubility in aqueous environment of iodine (I₂) is remarkably increased due also to equation (3), the redox battery according to the invention advantageously is capable of attaining high concentrations of iodine-containing species in the electrolyte solution that allows obtaining a particularly high energy density.

Preferably, the aqueous electrolyte according to the present invention comprises at least one cation selected from the group consisting of: potassium, sodium, lithium, zinc.

Said at least one cation may for example be the counter ion of the iodide present in the electrolyte solution and is a spectator ion in the redox charging/discharging reactions in equations (1) and (2) above of the redox flow battery according to the present invention.

Preferably, the aqueous electrolyte solution has a pH value in the range of from about 1.3 to about 12, more preferably of from about 4 to about 9.

In this pH range, the Applicant has indeed found out possible optimizing the performances of the redox flow battery according to the invention balancing on one hand the maintenance of a stably constant open circuit cell voltage and on the other hand a prolonged battery longevity by avoiding or remarkably reducing corrosion-related degradation phenomena of the battery.

According to the present invention, the aqueous electrolyte of the redox flow battery comprises at least one pH buffering agent.

Surprisingly, the Applicant has found out that a H₂-I₂ redox flow battery in which the aqueous electrolyte contains at least one pH buffering agent can maintain an almost constant open circuit voltage, maintaining the active species redox potential constant too and at the same time avoids or at least remarkably also reduces the corrosion phenomena of the components of the battery such as piping, tanks, and cell.

In the art, pH buffering agents are well-known for they capacity of resisting to changes of pH when an acid or an alkali are added to it. The more the concentration of the buffer solution, the more the buffering capacity, that is, the quantitative measure of the resistance to change of pH of a solution containing a pH buffering agent with respect to a change of acid or alkali concentration.

Preferably, in the aqueous electrolyte the concentration of said at least one pH buffering agent ranges in the interval from 0.01 M to 5 M.

In the aqueous electrolyte of the redox flow battery according to the invention, the at least one pH buffering agent can show any working pH. Well-known pH buffering agents are made of a mixture of a weak acid with its conjugate base, or vice versa; usually in the art said pH buffering agents are indicated with the name of the acid/base or its coniugate base/acid. For example, when referring to a pH buffering agent made of acetic acid (weak organic acid of formula CH₃COOH) and a salt containing its conjugate base, the acetate anion (CH₃COO⁻), the skilled person refers to it as a "acetic" or "acetate" buffer. In the context of the present invention, the same well-known praxis is followed and, when referring to a pH buffering agent and the name of a weak acid or of a base is used, it is meant the buffer made of the mixture of said weak acid with its conjugate base, or vice versa.

Preferably, said at least one pH buffering agent is selected from the group consisting of: citrate buffer, phosphate buffer, acetic buffer, ammonia buffer. In the aqueous electrolyte solution of the redox flow battery according to the invention, said pH buffering agents may also be used in mixtures to attain a desired working pH.

According to the present invention, said at least one pH buffering agent is a phosphate buffer, for example made of a mixture of potassium and/or sodium monobasic dihydrogen phosphate and potassium and/or sodium dibasic monohydrogen phosphate. Said phosphate buffer has according to the present invention a working pH range of about 5.8 to about 10. Thus, in the redox flow battery according to the present invention the aqueous electrolyte solution comprises a phosphate pH buffering agent and has a pH value in the range of from about 5.8 to about 10, more preferably, in the range of from about 5.8 to about 8. In addition to the iodine-containing species and the pH buffering agent, the aqueous electrolyte may contain further additives commonly known in the art. For example, the aqueous electrolyte may contain an additive to further improve the solubility of the aqueous electrolyte active species.

Basic construction components of the redox flow battery according to the present invention are a hydrogen gas tank, an electrolyte tank containing an aqueous electrolyte, and at least one cell having a first half-cell having a first electrode, a second half-cell having a second electrode, and a separator membrane arranged between the first and second half-cell. Said basic construction components may be assembled according to any well-known common praxis in the relevant art for carrying out the charging/discharging operations according to equations (1) and (2) above defined.

In the redox flow battery according to the present invention, preferably when the buffering agent has a working pH ≤ 7, the hydrogen tank is fluidly connected to the first half cell having a first electrode (also referred to as the hydrogen electrode) and the electrolyte tank is fluidly connected to the second half cell having a second electrode (also referred to as the electrolyte electrode).

In such case, additionally, the aqueous electrolyte (also referred to as the posolyte or the catholyte) contains iodine-containing species as active species and a pH buffering agent, and is pumped through the second half cell, contacting the second electrode, during both battery charge and discharge operations.

During charge the redox flow battery is electrically connected to a power source and iodide ions contained in the electrolyte solution oxidize to iodine at the electrode of the second half cell, while hydronium ions diffuse through the separator membrane and are reduced to hydrogen gas at the electrode in the first half cell. Hydrogen gas flows out of the first half cell, is collected and stored in a hydrogen gas tank until discharge starts.

During battery discharge the redox flow battery is electrically connected to an electrical load and the hydrogen gas is fluxed from the hydrogen gas tank to the first half cell, where hydrogen gas is oxidized to protons (thus hydronium ions in the electrolyte) at the first electrode. At the same time, the electrolyte is pumped from the electrolyte tank through the second half-cell, where iodine is reduced to iodide at the second electrode.

The first and second electrodes can be made of any suitable and conductive material known to the skilled person for operating a redox flow battery.

For example, the electrode of the first half cell can advantageously be made of a porous substrate with an appropriate catalyst on it. The catalyst could be for example deposited, grown, or transferred onto the substrate. The catalyst could be a Pt-group catalyst, but a non-precious metal might also be used based on its catalytic activity.

The electrode of the second half cell can be advantageously made of inexpensive yet conducting materials, like for example high surface area carbon electrodes.

In the hydrogen tank, hydrogen gas can advantageosly be compressed, using for example a compressor, and stored at high pressure in a storage tank (up to several hundred bars). Alternatively, hydrogen can be stored at low pressure in a storage tank.

The temperature of operation of the cell of the battery according to the present invention is not particularly limited within the range of operation temperatures of hydrogen-iodine redox flow batteries.

According to an embodiment of the present invention, the cell operates at room temperature.

The redox flow battery according to the invention may contain, in addition to the above basic construction components, other components known in the art.

Preferably, the redox flow battery according to the present invention, further includes a humidifier fluidly connecting hydrogen tank to the inlet of said first half cell.

The redox flow battery according to the present invention further includes:
- a humidifier apt to fluidly connect said hydrogen tank to the inlet of first half cell;
- a gas separator apt to fluidly connect said hydrogen tank to the outlet of first half cell; and
- a valve apt to operate in a first and in a second mode, wherein in said first mode said valve is apt to fluidly connect the outlet of the first half cell to said gas separator and in said second mode said valve is apt to fluidly connect the outlet of the first half cell to said humidifier.

Preferably, the redox flow battery according to the present invention includes:
- a first circulation path fluidly connecting said hydrogen gas tank, said humidifier, and said first half-cell;
- a second circulation path fluidly connecting said electrolyte tank and said second half-cell; and
- a third circulation path fluidly connecting said first and second half cell, said gas separator, and said hydrogen gas tank.

In the first half-cell, reduction/oxidation reactions of the hydrogen gas/proton occur, according to equations (1) and (2) above. When said reactions occur during charge/discharge of the redox flow battery, hydronium ions are produced in or depleted from the electrolyte solution.

In the cell of the redox flow battery according to the invention the separator membrane arranged between the first and second half-cell allows passage of ions between the two half-cells, and the redox flow battery can therefore work either with only one electrolyte solution, especially when the buffering agent has a working pH ≤ 7, or with two electrolyte solutions circulating in the two half-cells, especially when the buffering agent has a working pH ≥ 7.In this way, the redox flow battery always exchange ions through the separator membrane arranged between said first and second half-cell.

Preferably, the redox flow battery according to the present invention includes an anolyte tank containing an aqueous anolyte, more preferably when the buffering agent has a working pH ≥ 7. When present, said anolyte tank is preferably included in the above first and third circulation paths.

Said aqueous anolyte preferably comprises the same pH buffering agent of the aqueous electrolyte solution according to the invention. In this way, the same pH buffering agent in the aqueous electrolyte solution of the second half-cell and in the anolyte solution of the first half-cell is maintained.

In a further aspect, the present invention relates also to an energy storage or delivery system comprising at least one redox-flow battery according to the first aspect of the present invention and at least one connection means apt to connect said at least one redox-flow battery to an external power source or to a load.

The advantages of the energy storage or delivery system according to this further aspect have been already outlined with reference to the above redox flow battery according to the first aspect of the invention and are not repeated herewith.

In further aspects, the present invention relates also to a method of storing electricity by means of the redox-flow battery according to the present invention, and to a method of delivering electricity by means of the redox-flow battery according to the present invention.

In particular, the present invention relates also to a method of storing electricity comprising the steps of:
a) providing a redox-flow battery according to the present invention;
b) electrically connecting said redox-flow battery to a power source;
and to a method of delivering electricity comprising the steps of:
a) providing a redox-flow battery according to according to the present invention;
b) electrically connecting said redox-flow battery to a load.

The advantages of the methods according to these further aspects have been already outlined with reference to the above redox flow battery according to the first aspect of the invention and are not repeated herewith.

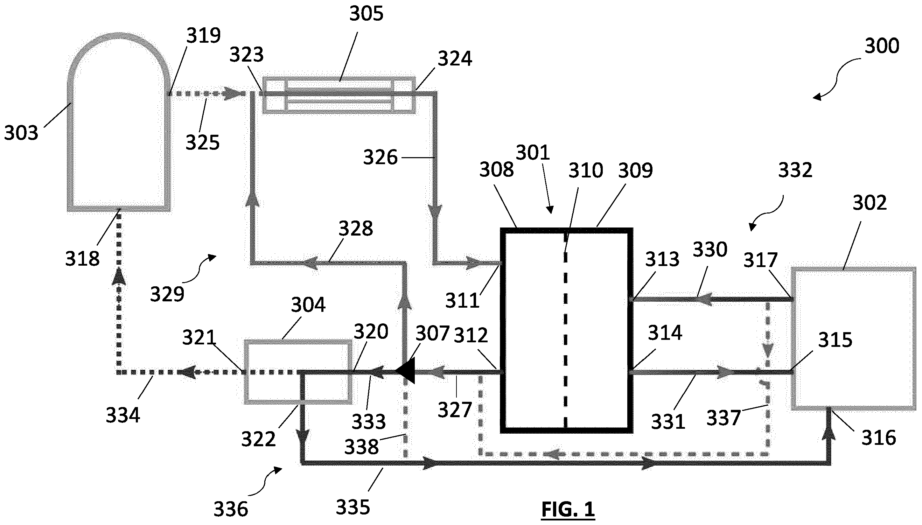

Further features and advantages of the invention will appear more clearly from the following description of some preferred embodiments thereof, made hereinafter with reference to the accompanying drawings of figures 1-8.

With reference to figure 1, a schematic representation of an embodiment of the redox flow battery according to the invention in which the pH buffering agent of the aqueous electrolyte solution shows an acid working pH is shown.

In figure 1, redox flow battery 300 includes a cell 301, an electrolyte tank 302, a hydrogen gas tank 303, a gas separator 304, a humidifier 305, and a valve 307.

Cell 301 includes a first half-cell 308, a second half-cell 309, a separator membrane 310 arranged between said first and second half-cells 308 and 309. The first half cell 308 includes an inlet 311 and an outlet 312, the second half cell 309 includes an inlet 313 and an outlet 314.

Electrolyte tank 302 includes a first inlet 315 and a second inlet 316 and outlet 317. Hydrogen tank 303 includes inlet 318 and outlet 319. Gas separator 304 includes an inlet 320 a first outlet 321 and a second outlet 322. Humidifier 305 includes an inlet 323 and an outlet 324.

Outlet 319 of hydrogen tank 303 is fluidly connected through conduit stretch 325 to inlet 323 of humidifier 305. Outlet 324 of humidifier 305 is fluidly connected through conduit stretch 326 to inlet 311 of first half cell 308. Humidifier 305 therefore fluidly connects hydrogen tank 303 to half cell 308.

Outlet 312 of first half cell 308 is fluidly connected through conduit stretch 327 to valve 307 which, through conduit stretch 328, is fluidly connected to conduit stretch 325, and though by-pass conduit 338 is fluidly connected to inlet 316 of electrolyte tank 302.

Conduit stretch 327 is fluidly connected through by-pass conduit 337 to conduit stretch 330, exiting from electrolyte tank 302. Through by-pass conduit 337 the electrolyte exiting electrolyte tank 302 is directly fed to humidifier 305.

Hydogen tank 303, humidifier 305, first half-cell 308, form first circulation path 329 of redox flow battery 300.

Outlet 317 of electrolyte tank 302 is fluidly connected through conduit stretch 330 with inlet 313 of second half cell 309. From electrolyte tank 302, the aqueous electrolyte contained in it is pumped into said second half-cell 309. Outlet 314 of second half-cell 309 is fluidly connected through conduit stretch 331 to inlet 315 of electrolyte tank 302.

Electrolyte tank 302 and second half cell 309 form second circulation path 332 of redox flow battery 300.

Inlet 320 of separator 304 is fluidly connected through conduit stretch 333 to valve 307. First outlet 321 of separator 304 is fluidly connected through conduit stretch 334 to inlet 318 of hydrogen tank 303, whereas second outlet 322 is fluidly connected through conduit stretch 335 to inlet 316 of electrolyte tank 302. Due to the separator properties of separator membrane 310, hydronium ions are exchanged between first half-cell 308 and second half-cell 309. It might be that the electrolyte exiting from outlet 317 of electrolyte tank 302 and fed to inlet 313 of second half cell 309, also passes to first half cell 308 through the separator membrane 310. In this case, through valve 307 and gas separator 304, the electrolyte is separated from the hydrogen gas, which is then fed to hydrogen tank 303, and finally recirculated through conduit 335 to inlet 316 of electrolyte tank 302 again.

First half cell 308, second half cell 309, gas separator 304, and hydrogen gas tank 303 form third circulation path 336 of redox flow battery 300.

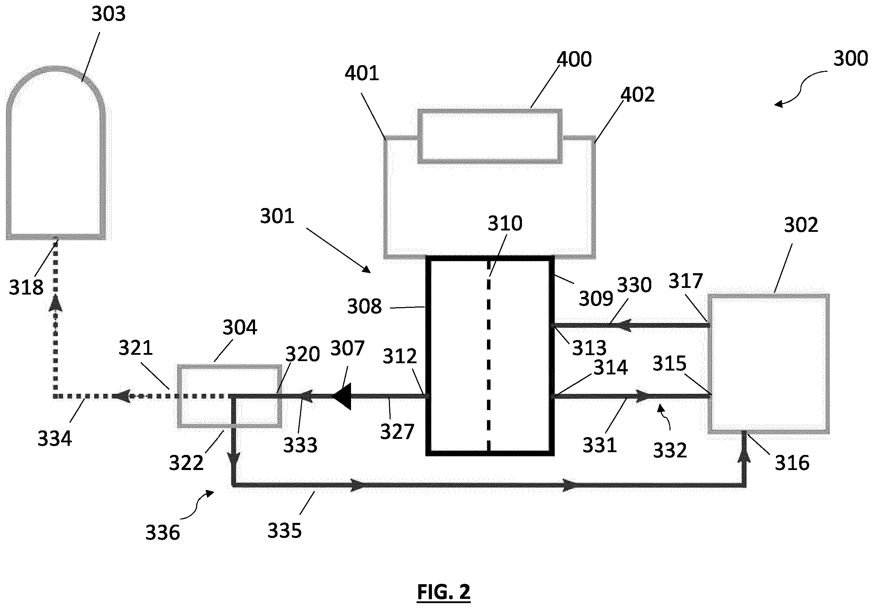

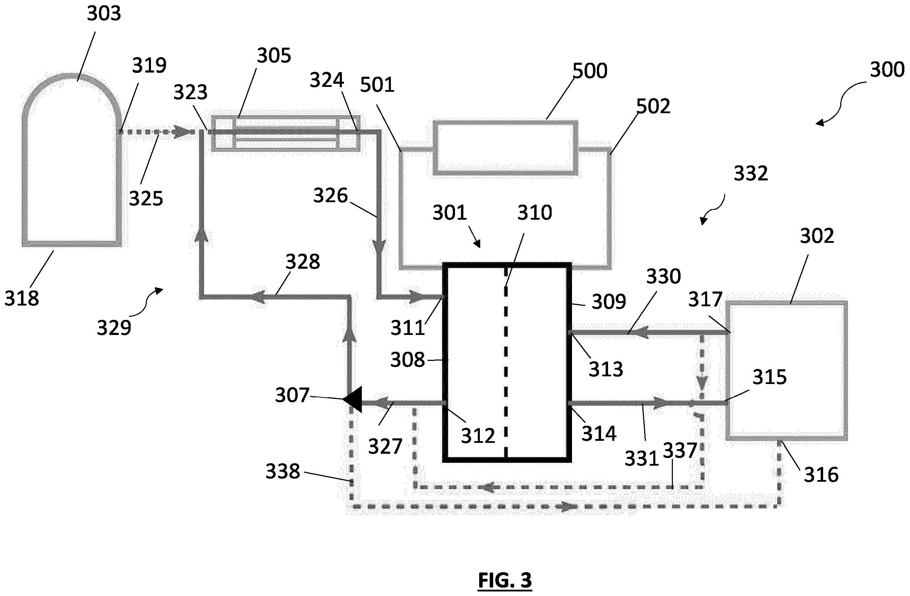

Redox flow battery 300 described above can operate in charging and in discharging mode, as respectively depicted in figures 2 and 3.

With reference to figure 2, redox flow battery 300 and power souce 400 are represented. Redox flow battery 300 in figure 2 is the same of figure 1, and its parts involved in the charging operation are represented.

Power source 400 includes a first connection means 401 apt to electrically connect power source 400 to first half-cell 308 and a second connection means 402 apt to electrically connect power source 400 to second half-cell 309. First and second connection means 401 and 402 are for example electrical wires.

In redox flow battery 300 depicted in figure 2, valve 307 is set up to fluidly connect first half cell 308 to gas separator 304 and second circulation path 332 and third circulation path 336 are involved only in the charging mode.

The electrolyte solution in electrolyte tank 302 is pumped through conduit 330 to inlet 313 of second half cell 309. In said half cell, the iodide of the electrolyte solution is oxidized to iodine, liberating electrons, that exit second half cell 309 and flow through connection means 402, through the power source 400, then flow through the electrical wire 401 and enter first half cell 308. Iodine exits second half cell 309 through outlet 314 and is fed through conduit 331 to inlet 315 of electrolyte tank 302 again. In this way, iodine is accumulated in the electrolyte solution contained in electrolyte tank 302.

Due to the separator properties of separator membrane 310, the hydronium ions in second half cell 309 pass to first half cell 308, in which the hydronium ions are combined with the electrons entered in the first half cell from connection means 401 and are reduced to hydrogen gas. It is not excluded that some electrolyte can also pass from the second half cell 309 to the first half cell 308 through the separator membrane 310. The electrolyte passed to first half cell 308 and the hydrogen thus produced exit from outlet 312 of first half cell and then, through valve 307 and conduits 327 and 333, are fed to inlet 320 of gas separator 304. In gas separator 304 the liquid electrolyte is separated from hydrogen in gaseous form and recirculated through conduit 335 to inlet 316 of electrolyte tank 302 again. The hydrogen in gaseous form separated from gas separator 304 exits from outlet 321 and is then fed to hydrogen tank 303 through conduit stretch 334. In this way, hydrogen gas is accumulated in hydrogen tank 303.

In this way, battery 300 through second circulation path 332 and third circulation path 336 operates in charging mode and is thus capable of storing electricity.

With reference to figure 3, redox flow battery 300 and load 500 are represented. Redox flow battery 300 in figure 3 is the same of figure 1, and its parts involved in the discharging operation are represented.

Load 500 includes a first connection means 501 apt to electrically connect load 500 to first half-cell 308 and a second connection means 502 apt to electrically connect load 500 to second half-cell 309. First and second connection means 501 and 502 are for example electrical wires.

In redox flow battery 300 depicted in figure 3, valve 307 is set up to fluidly connect first half cell 308 to humidifier 305 and first circulation path 329 and second circulation path 332 are involved only in the discharging mode.

During discharge, hydrogen gas exits from outlet 319 of hydrogen gas tank 303 and flows to the conduit stretch 325, where it is mixed with the electrolyte that exits the electrolyte tank 302 through the outlet 317 and with the electrolyte that exits the first half cell from outlet 312. Hydrogen gas and electrolyte are then fed into inlet 323 of the humidifier 305, they exit from outlet 324 of the same humidifier 305 and enter the first half cell 308 at the inlet 311. In the first half cell 308 hydrogen gas is oxidized to protons and electrons are liberated. Electrons flow through the connection means 501, through the load 500 and through the connection means 502 and enter second half cell 309.

Due to the separator properties of separator membrane 310, hydronium ions and may be electrolyte pass from first half cell 308 to second half cell 309.The electrolyte exits from outlet 312 of first half cell 308 and then through conduit 327 enters valve 307, from which through conduit 328 is fed to conduit stretch 325 and through conduit 338 is fed to electrolyte tank 302.

The electrolyte solution in electrolyte tank 302 is pumped through conduit 330 to inlet 313 of second half cell 309. In said half cell, the iodine of the electrolyte solution combines with the electrons coming from the connection means 502 and is reduced to iodide. It then exits second half cell 309 through outlet 314 and is fed through conduit 331 to inlet 315 of electrolyte tank 302 again. In this way, iodine is consumed going back to the initial iodide form in the electrolyte solution contained in electrolyte tank 302.

In this way, battery 300 through first circulation path 329 and second circulation path 332 operates in discharging mode and is thus capable of delivering electricity.

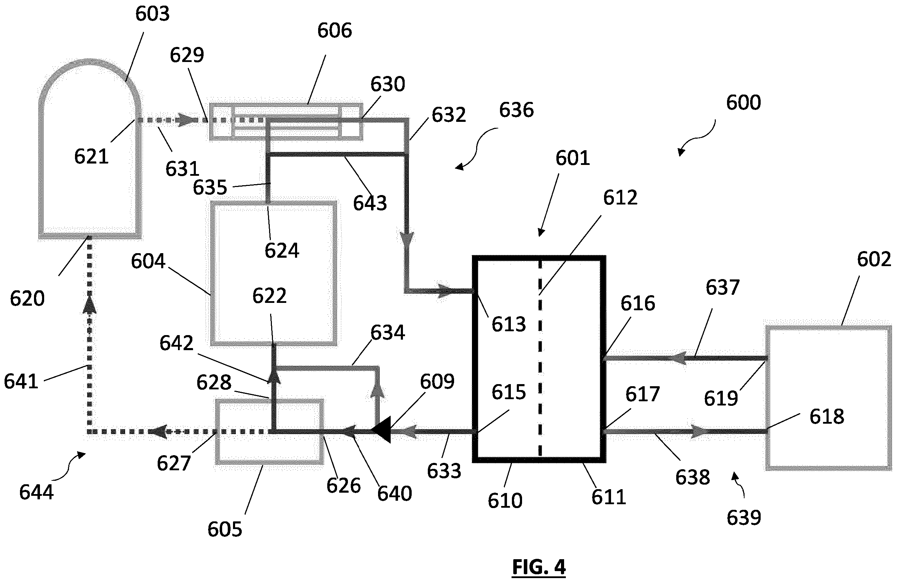

Figure 4 shows a schematic representation of a further embodiment of the redox flow battery according to the invention in which the pH buffering agent of the aqueous electrolyte solution shows a basic working pH.

In figure 4, redox flow battery 600 includes a cell 601, an electrolyte tank 602, a hydrogen gas tank 603, an anolyte tank 604, a gas separator 605, a humidifier 606, and a valve 609.

Cell 601 includes a first half-cell 610, a second half-cell 611, a separator membrane 612 arranged between said first and second half-cells 610 and 611. The first half cell 610 includes an inlet 613, and an outlet 615, the second half cell 611 includes an inlet 616 and an outlet 617.

Electrolyte tank 602 includes inlet 618 and outlet 619. Hydrogen tank 603 includes inlet 620 and outlet 621. Anolyte tank 604 includes an inlet 622, and an outlet 624. Gas separator 605 includes an inlet 626, a first outlet 627 and a second outlet 628. Humidifier 606 includes an inlet 629 and an outlet 630.

Outlet 621 of hydrogen tank 603 is fluidly connected through conduit stretch 631 to inlet 629 of humidifier 606. Outlet 630 of humidifier 606 is fluidly connected through conduit stretch 632 to inlet 613 of first half cell 610. Outlet 615 of first half cell 610 is fluidly connected through conduit stretch 633 to valve 609 which, through conduit stretch 634, is fludly connected to inlet 622 of anolyte tank 604. Outlet 624 is fluidly connected through 635 to humidifier 606. Humidifier 606 therefore fluidly connects hydrogen tank 603 to half cell 610.

Hydogen tank 603, humidifier 606, first half-cell 610, and anolyte tank 604 form first circulation path 636 of redox flow battery 600.

Conduit stretch 637 fuidly connects outlet 619 of electrolyte tank 602 to inlet 616 of second half cell 611 and is apt to bring the aqueous electrolyte of electrolyte tank 602 into said second half-cell 611. Outlet 617 of second half-cell 611 is fluidly connected through conduit stretch 638 to inlet 618 of electrolyte tank 602.

Electrolyte tank 602 and second half cell 611 form second circulation path 639 of redox flow battery 600.

Inlet 626 of separator 605 is fluidly connected through conduit stretch 640 to valve 609, which is fluidly connected to outlet 615 of first half cell via conduit stretch 633. First outlet 627 of separator 605 is fluidly connected through conduit stretch 641 to inlet 620 of hydrogen tank 603, whereas second outlet 628 is fluidly connected through conduit stretch 642 to inlet 622 of anolyte tank 604.

Conduit stretch 643 fluidly connects outlet 624 of anolyte tank 604 to inlet 613 of first half cell 610 by-passing humidifier 606 and is apt to bring the anolyte into said first half-cell 610.

Anolyte tank 604, first half cell 610, second half-cell 611, gas separator 605, and hydrogen gas tank 603 form third circulation path 644 of redox flow battery 600.

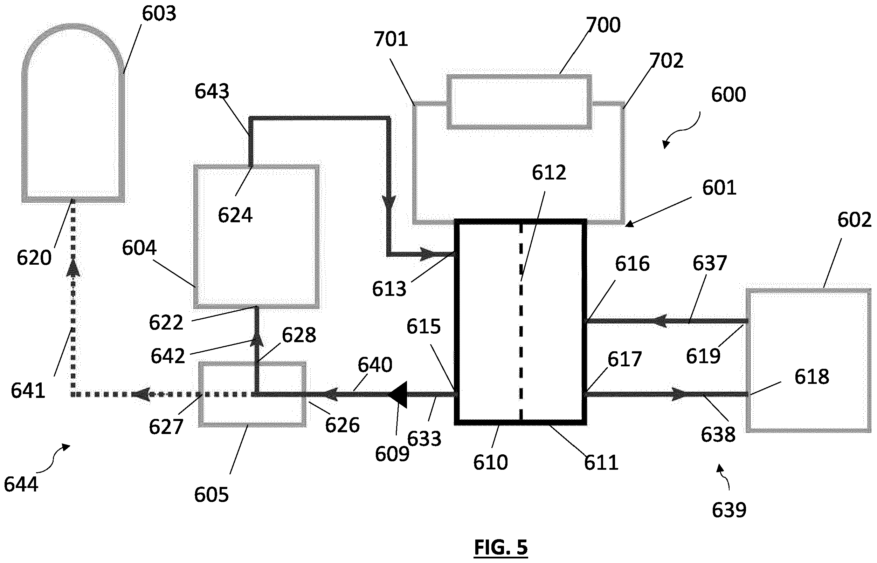

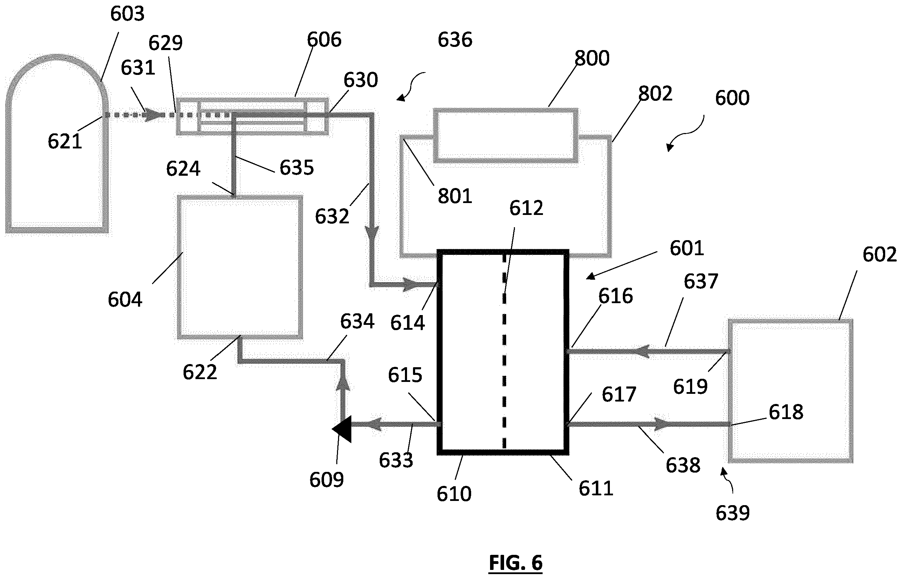

Redox flow battery 600 described above can operate in charging and in discharging mode, as respectively depicted in figures 5 and 6.

With reference to figure 5, redox flow battery 600 and power souce 700 are represented. Redox flow battery 600 in figure 5 is the same of figure 4 and its parts involved in the charging operation are represented.

Power source 700 includes a first connection means 701 apt to electrically connect power source 700 to first half-cell 610 and a second connection means 702 apt to electrically connect power source 700 to second half-cell 611. First and second connection means 701 and 702 are for example electrical wires.

In redox flow battery 600 depicted in figure 5, valve 609 is set up to fluidly connect first half cell 610 to gas separator 605, and second circulation path 639 and third circulation path 644 are involved only in the charging mode.

The electrolyte solution in electrolyte tank 602 is pumped through conduit 637 to inlet 616 of second half cell 611. In said half cell, the iodide of the electrolyte solution is oxidized to iodine, liberating electrons, that exit second half cell 611 and flow through connection means 702, through the power source 700, then flow through connection means701 and enter first half cell 610. Iodine exits second half cell 611 through outlet 617 and is fed through conduit 638 to inlet 618 of electrolyte tank 602 again. In this way, iodine is accumulated in the electrolyte solution contained in electrolyte tank 602.

From anolyte tank 604, the anolyte exits in outlet 624 and through conduit stretch 643 to inlet 613 of first half cell 610. Due to the separator properties of separator membrane 612, hydroxide ions in second half cell 611 pass to first half cell 610 in the anolyte. In first half cell 610, the hydroxide ions thus present are combined with the electrons that entered in the first half cell from electrical wire 701 and the ions are reduced to hydrogen gas. The anolyte and the hydrogen thus produced exit from outlet 615 of first half cell 610 and then, through valve 609 and conduits 633 and 640, are fed to inlet 626 of gas separator 605. In gas separator 605 the anolyte is separated from hydrogen in gaseous form and recirculated through conduit 642 to inlet 622 of anolyte tank 604 again. The hydrogen in gaseous form separated from gas separator 605 exit from outlet 627 and is then fed to hydrogen tank 603 through conduit stretch 641. In this way, hydrogen gas is accumulated in hydrogen tank 603.

In this way, battery 600 through second circulation path 644 and third circulation path 639 operates in charging mode and is thus capable of storing electricity.

With reference to figure 6, redox flow battery 600 and load 800 are represented. Redox flow battery 600 in figure 6 is the same of figure 4, and its parts involved in the discharging operation are represented.

Load 800 includes a first connection means 801 apt to electrically connect load 800 to first half-cell 610 and a second connection means 802 apt to electrically connect load 800 to second half-cell 611. First and second connection means 801 and 802 are for example electrical wires.

In redox flow battery 600 depicted in figure 6, valve 609 is set up to fluidly connect first half cell 610 to humidifier 606 and first circulation path 636 and second circulation path 639 are involved only in the discharging mode.

From anolyte tank 604, the anolyte exits through outlet 624 and passing by conduit stretch 635 enters humidifier 606 in which it is mixed with hydrogen gas exited from outlet 621 of hydrogen gas tank 603, which enters humidifier 606 by inlet 629 through conduit stretch 631.

Hydrogen gas and anolyte enter first half cell 610 through conduit stretch 632 and inlet 614. In first half cell 610 hydrogen is oxidized in hydroxide ions and electrons are liberated. Electrons flow through connection means 801, through the load 800 and through connection means 802 and enter second half cell 611.

In this way, hydrogen gas is consumed and hydroxide ions are accumulated in the anolyte and, due to the separator properties of separator membrane 612, they also pass into the electrolyte circulating in second half cell 611.

In second half cell 611, the electrolyte exited from outlet 619 of electrolyte tank 602 through conduit stretch 637 enters from inlet 616. The iodine of the electrolyte solution combines with the electrons coming from connection menas 802 and is reduced in second half cell 611 to iodide. The electrolyte containing iodide thus exits through outlet 617 and is fed through conduit 638 to inlet 618 of electrolyte tank 602 again. In this way, iodine is consumed going back to the initial iodide form in the electrolyte solution contained in electrolyte tank 602.

In this way, battery 600 through first circulation path 636 and second circulation path 639 operates in discharging mode and is thus capable of delivering electricity.

Features and advantages of the invention will also appear more clearly from the following non-limiting examples.

### EXPERIMENTAL PART

### Example 1

The hydrogen/proton redox reactions and the iodine/iodide redox reactions occurring in the redox flow battery according to the invention were studied by cyclic voltammetries (H₂ flow rate of about 0.1l/min). Gamry 3000 potentiostat (Framework software) was used for the tests.

The experimental apparatus used was an H-cell comprising two glass jars held together with a clamp, and in which a separator membrane (Nafion 115 from Fuel Cell Store) between said jars was positioned.

Cyclic voltammetries of hydrogen in different buffer solutions

When studying hydrogen/proton redox reactions, the solution was the same on both jars of the H-cell.

The working electrode was a mixed Pt/carbon electrode. In particular, it was Pt nanoparticles on carbon paper (0.2mg/cm² Pt-C 20%, Fuel Cell Store, US).

When characterizing hydrogen reduction reaction (H⁺ to H₂), no H₂ gas was purged in the working electrode jar.

When characterizing hydrogen oxidation reaction (H₂ to H⁺), H₂ was purged in the working electrode jar.

Cyclic voltammetries were performed to test hydrogen redox reactions in different acidic and alkaline buffer solutions.

These tests were performed in an H-cell, with Pt nanoparticles on carbon paper (0.2mg/cm² Pt-C 20%, Fuel Cell Store, US) as working electrode (effective area of 2cm²), platinum foil as counter electrode (effective area of 3.2cm²) and Ag/AgCl/3M KCI as reference electrode.

The solution was the same on both sides of the H-cell and amount used in all tests was 72 ml per side. Working and reference electrodes were placed in the same compartment, while the counter electrode was placed in the other one.

Hydrogen redox reactions were tested in the following solutions:
0.5M citric acid buffer at pH 2.5 (0.4M citric acid + 0.1M K₂HPO₄);
1.2M acetic acid buffer at pH 4.6 (0.6M acetic acid + 0.6M CH₃CO₂K);
1.3M phosphate buffer at pH 6.0 (0.37M K₂HPO₄ + 0.92M KH₂PO₄);
1.3M phosphate buffer at pH 8.0 (0.37M K₂HPO₄ + 0.92M KH₂PO₄ + KOH till desired pH is reached) and
1.3M phosphate buffer at pH 10.0 (0.37M K₂HPO₄ + 0.92M KH₂PO₄ + KOH till desired pH is reached).

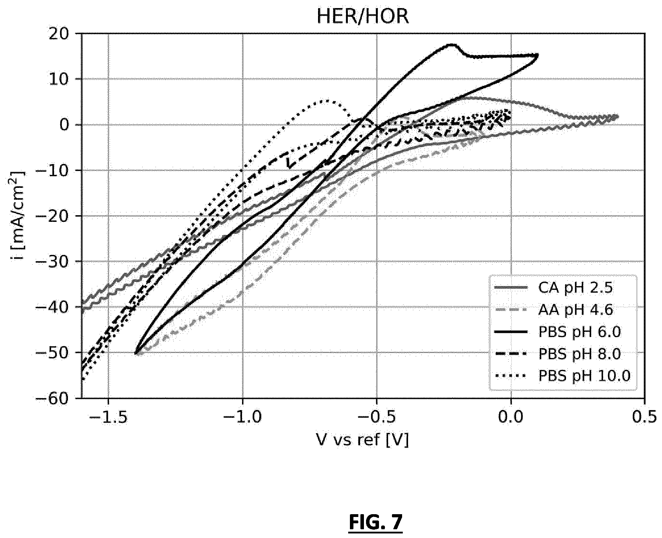

Figure 7 shows the different cyclic voltammetries recorded.

It can be seen from Figure 7 that HOR peaks position and corresponding currents are easily readable, while HER showed in all cases higher currents. The redox performance in acidic, neutral, and weak alkaline solutions (pH 0.3 -10) showed a pH dependent potential shift and a relatively stable HOR current level. In any case, hydrogen redox reaction was always visible.

Cyclic voltammetries of iodine in different buffer solutions

When studying iodine/iodide redox reactions, the solution at the working electrode was different from the solution at the counter electrode.

Cyclic voltammetries were carried out to test iodine redox reactions in different acidic and alkaline buffer solutions.

These tests were performed in a beaker, with graphite as working electrode (active area of 2cm²), platinum foil as counter electrode (effective area of 3.2cm²) and Ag/AgCl/3M KCI as reference electrode.

The amount of solution used in all tests was 40 ml and the distance between working and counter electrode was roughly 1.2cm.

In all tests, KI concentration was 0.1M, while supporting electrolyte or buffers concentration and pH were as follows:
0.5M citric acid buffer at pH 2.5 (0.4M citric acid + 0.1M K₂HPO₄);
0.2M acetic acid buffer at pH 4.6 (0.1M acetic acid + 0.1M CH₃CO₂K);
0.64M phosphate buffer at pH 6.0 (0.18M K₂HPO₄ + 0.46M KH₂PO₄);
0.64M phosphate buffer at pH 8.0 (0.18M K₂HPO₄ + 0.46M KH₂PO₄ + KOH till desired pH is reached) and
0.64M phosphate buffer at pH 10.0 (0.18M K₂HPO₄ + 0.46M KH₂PO₄ + KOH till desired pH is reached).

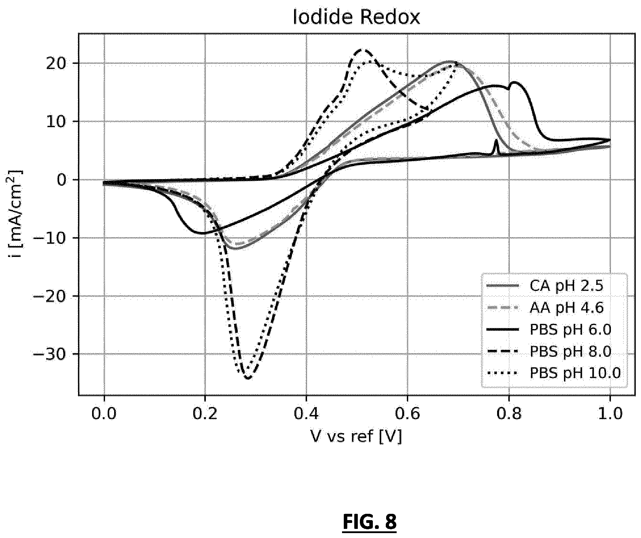

Figure 8 shows the different cyclic voltammetries recorded. It can be seen in Figure 8 that the average redox potential is pretty stable in all solutions and pH studied, suggesting that iodine redox potential does not depend on pH.

### Example 2

pH stability was tested in two different solutions containing 3M I⁻: 0.65M phosphate buffer solution at an initial pH of 5.8 and 0.65M NaCl solution (no buffer) at an initial pH of 5.4.

The tests were conducted in a beaker, with 20 mL of solution. The working electrode was graphite, with an effective area of 4 cm². Iodide oxidation reaction was performed at the working electrode. The counter electrode was platinum foil with an effective area of 2cm² and was placed in a glass tube with frit inside the beaker. At the counter electrode protons were reduced to hydrogen. An Ag/AgCl/3M KCI reference electrode was placed near the working electrode.

First, linear scans at 30mV/s starting at 0V vs ref and going up to more positive potentials were performed on the working electrode to oxidize iodide, making sure the voltage was kept below the oxygen evolution voltage onset. At the same time, the voltage at the counter electrode would decrease to have hydrogen evolution.

When the buffer solution was used, the pH remained constant even after 30 scans. On the other hand, when the NaCl electrolyte was used, the pH changed from 5.4 to 8.5 after only 5 cycles. This showed that a buffer is needed to keep the solution pH constant while running the cell.

To further check the pH stability in the buffer solution, a chronoamperometry was performed on the working electrode at a voltage of 0.53V vs ref (below OER voltage). The test was stopped when the current dropped below 10% of the initial current. This meant that basically all iodide had been oxidized to iodine, therefore the same amount of H⁺ had been depleted from the solution to form H₂. Still, the solution pH was stable and equal to that of the initial solution.

The tests confirmed that the redox flow battery including a pH buffering agent is capable of maintaining an almost constant pH during the scans, in this way maintaining the open circuit voltage and the active species redox potential constant too and at the same time avoiding or at least remarkably also reducing the corrosion phenomena of the components of the battery such as piping, tanks, and cell.

## Claims

1. A redox flow battery comprising:
- a hydrogen gas tank;
- an electrolyte tank containing an aqueous electrolyte;
- at least one cell having a first half-cell having a first electrode, a second half-cell having a second electrode, and a separator membrane arranged between the first and second half-cell;
- a humidifier apt to fluidly connect said hydrogen tank to the inlet of said first half cell;
- a gas separator apt to fludly connect said hydrogen tank to the outlet of said first half cell; and
- a valve apt to operate in a first and in a second mode, wherein in said first mode said valve is apt to fluidly connect the outlet of the first half cell to said gas separator and in said second mode said valve is apt to fluidly connect the outlet of the first half cell to said humidifier;
wherein the aqueous electrolyte comprises a phosphate buffer having a working pH range of about 5.8 to about 10 and at least one iodine-containing species selected from the group consisting of: iodine, a triiodide, an iodide;
such that the operation of the redox flow battery is based on hydrogen gas and the iodine-containing species selected from said group.

2. The redox flow battery according to claim 1, wherein the aqueous electrolyte comprises at least one cation selected from the group consisting of: potassium, sodium, lithium, zinc.

3. The redox flow battery according to claim 1 or 2, including:
- a first circulation path fluidly connecting said hydrogen gas tank, said humidifier, and said first half-cell;
- a second circulation path fluidly connecting said electrolyte tank and said second half-cell; and
- a third circulation path fluidly connecting said first and second half cell, said gas separator, and said hydrogen gas tank.

4. The redox flow battery according to any one of claims from 1 to 3, comprising an anolyte tank containing an aqueous anolyte.

5. The redox flow battery according to claim 4 when dependent from claim 3, wherein said first and third circulation paths include also said anolyte tank.

6. The redox flow battery according to claim 4 or 5, whierein said aqueous anolyte comprises the same pH buffering agent of said aqueous electrolyte solution.

7. An energy storage or delivery system comprising at least one redox-flow battery according to any one of claims 1 to 6, and at least one connection means apt to connect said at least one redox-flow battery to an external power source or to a load.

8. A method of storing electricity comprising the steps of:
a) providing a redox-flow battery according to any one of claims 1 to 6;
b) electrically connecting said redox-flow battery to a power source.

9. A method of delivering electricity comprising the steps of:
a) providing a redox-flow battery according to any one of claims 1 to 6;
b) electrically connecting said redox-flow battery to a load.

## Patentansprüche

1. Redox-Durchflussbatterie, umfassend:
- einen Wasserstoffgastank;
- einen Elektrolyttank, der einen wässrigen Elektrolyt enthält;
- mindestens eine Zelle, die eine erste Halbzelle mit einer ersten Elektrode, eine zweite Halbzelle mit einer zweiten Elektrode und eine Trennmembran aufweist, die zwischen der ersten und zweiten Halbzelle angeordnet ist;
- einen Befeuchter, der geeignet ist, um den Wasserstofftank mit dem Einlass der ersten Halbzelle fluidtechnisch zu verbinden;
- einen Gasabscheider, der geeignet ist, um den Wasserstofftank mit dem Auslass der ersten Halbzelle fluidtechnisch zu verbinden; und
- ein Ventil, das geeignet ist, um in einem ersten und in einem zweiten Modus zu arbeiten, wobei das Ventil in dem ersten Modus geeignet ist, um den Auslass der ersten Halbzelle fluidtechnisch mit dem Gasabscheider zu verbinden, und das Ventil in dem zweiten Modus geeignet ist, um den Auslass der ersten Halbzelle fluidtechnisch mit dem Befeuchter zu verbinden;
wobei der wässrige Elektrolyt einen Phosphatpuffer, der einen pH-Arbeitsbereich von etwa 5,8 bis etwa 10 aufweist, und mindestens eine iodhaltige Spezies umfasst, die aus der Gruppe ausgewählt ist, bestehend aus: lod, einem Triiodid, einem Iodid;
so dass der Betrieb der Redox-Durchflussbatterie auf Wasserstoffgas und der aus der Gruppe ausgewählten iodhaltigen Spezies basiert.

2. Redox-Durchflussbatterie nach Anspruch 1, wobei der wässrige Elektrolyt mindestens ein Kation umfasst, das ausgewählt ist aus der Gruppe, bestehend aus: Kalium, Natrium, Lithium, Zink.

3. Redox-Durchflussbatterie nach Anspruch 1 oder 2, umfassend:
- einen ersten Zirkulationspfad, der den Wasserstoffgastank, den Befeuchter und die erste Halbzelle fluidtechnisch verbindet;
- einen zweiten Zirkulationspfad, der den Elektrolyttank und die zweite Halbzelle fluidtechnisch verbindet; und
- einen dritten Zirkulationspfad, der die erste und zweite Halbzelle, den Gasabscheider und den Wasserstoffgastank fluidtechnisch verbindet.

4. Redox-Durchflussbatterie nach einem der Ansprüche 1 bis 3, umfassend einen Anolyttank, der einen wässrigen Anolyt enthält.

5. Redox-Durchflussbatterie nach Anspruch 4, wenn abhängig von Anspruch 3, wobei der erste und dritte Zirkulationspfad auch den Anolyttank umfassen.

6. Redox-Durchflussbatterie nach Anspruch 4 oder 5, wobei der wässrige Anolyt das gleiche pH-Puffermittel der wässrigen Elektrolytlösung umfasst.

7. Energiespeicher- oder -abgabesystem, umfassend mindestens eine Redox-Durchflussbatterie nach einem der Ansprüche 1 bis 6 und mindestens ein Verbindungsmittel, das geeignet ist, um die mindestens eine Redox-Durchflussbatterie mit einer externen Stromquelle oder einer Last zu verbinden.

8. Verfahren zum Speichern von Elektrizität, umfassend die Schritte:
a) Bereitstellen einer Redox-Durchflussbatterie nach einem der Ansprüche 1 bis 6;
b) elektrisches Verbinden der Redox-Durchflussbatterie mit einer Stromquelle.

9. Verfahren zum Abgeben von Elektrizität, umfassend die Schritte:
a) Bereitstellen einer Redox-Durchflussbatterie nach einem der Ansprüche 1 bis 6;
b) elektrisches Verbinden der Redox-Durchflussbatterie mit einer Last.

## Revendications

1. Batterie à flux redox comprenant :
- un réservoir d'hydrogène gazeux ;
- un réservoir d'électrolyte contenant un électrolyte aqueux ;
- au moins une cellule ayant une première demi-cellule ayant une première électrode, une deuxième demi-cellule ayant une deuxième électrode, et une membrane séparatrice disposée entre la première et la deuxième demi-cellule ;
- un humidificateur apte à relier fluidiquement ledit réservoir d'hydrogène à l'entrée de ladite première demi-cellule ;
- un séparateur de gaz apte à relier fluidiquement ledit réservoir d'hydrogène à la sortie de ladite première demi-cellule ; et
- une vanne apte à fonctionner dans un premier et dans un deuxième mode, dans laquelle, dans ledit premier mode, ladite vanne est apte à relier fluidiquement la sortie de la première demi-cellule audit séparateur de gaz et, dans ledit deuxième mode, ladite vanne est apte à relier fluidiquement la sortie de la première demi-cellule audit humidificateur ;
dans laquelle l'électrolyte aqueux comprend un tampon phosphate ayant une gamme de pH d'activité d'environ 5,8 à environ 10 et au moins une espèce à teneur en iode choisie dans le groupe constitué par : iode, un triiodure, un iodure ;
de sorte que le fonctionnement de la batterie à flux redox est basé sur l'hydrogène gazeux et l'espèce à teneur en iode choisie dans ledit groupe.

2. Batterie à flux redox selon la revendication 1, dans laquelle l'électrolyte aqueux comprend au moins un cation choisi dans le groupe constitué de : potassium, sodium, lithium, zinc.

3. Batterie à flux redox selon la revendication 1 ou 2, comprenant :
- un premier chemin de circulation reliant fluidiquement ledit réservoir d'hydrogène gazeux, ledit humidificateur et ladite première demi-cellule ;
- un deuxième chemin de circulation reliant fluidiquement ledit réservoir d'électrolyte et ladite deuxième demi-cellule ; et
- un troisième chemin de circulation reliant fluidiquement lesdites première et deuxième demi-cellules, ledit séparateur de gaz et ledit réservoir d'hydrogène gazeux.

4. Batterie à flux redox selon l'une quelconque des revendications 1 à 3, comprenant un réservoir d'anolyte contenant un anolyte aqueux.

5. Batterie à flux redox selon la revendication 4 lorsqu'elle dépend de la revendication 3, dans laquelle lesdits premier et troisième chemins de circulation comprennent également ledit réservoir d'anolyte.

6. Batterie à flux redox selon la revendication 4 ou 5, dans laquelle ledit anolyte aqueux comprend le même agent tampon de pH de ladite solution électrolytique aqueuse.

7. Système de stockage ou de distribution d'énergie comprenant au moins une batterie à flux redox selon l'une quelconque des revendications 1 à 6, et au moins un moyen de liaison apte à relier ladite au moins une batterie à flux redox à une source d'alimentation externe ou à une charge.

8. Procédé de stockage d'électricité comprenant les étapes suivantes :
a) fournir une batterie à flux redox selon l'une quelconque des revendications 1 à 6 ;
b) relier électriquement ladite batterie à flux redox à une source d'alimentation.

9. Procédé de distribution d'électricité comprenant les étapes suivantes :
a) fournir une batterie à flux redox selon l'une quelconque des revendications 1 à 6 ;
b) relier électriquement ladite batterie à flux redox à une charge.
